# EUROPEAN PATENT APPLICATION

(11) **EP 2 042 813 A1**
(43) Date of publication of application: **01.04.2009**
(21) Application number: 07253868.9
(22) Date of filing: 28.09.2007
(51) Int. Cl.: F24F 3/16, F24F 1/04, F24F 1/00

(54) **Air conditioning system**

(71) Applicant: Philip Morris Products S.A., 2000 Neuchâtel (CH)
(72) Inventor: The designation of the inventor has not yet been filed
(74) Representative: Bradford, Victoria Sophie

(57) **Abstract**

The invention concerns a system (100, 200) for conditioning air of a limited air space (1) comprising means for air displacement (10, 12, 13, 14, 15, 62), means for air purification (22, 24, 26, 28), means for air moisture control (28, 35, 36, 40), means for air temperature control (40), and means for air redistribution (50, 53, 63), wherein the means for air displacement (10, 12, 13, 14, 15, 62) and the means for air redistribution (50, 53, 63) are setup to create displacement ventilation in the limited air space (1) and wherein the system (100, 200) is mobile.

## Description

The present invention relates to an air conditioning system.

The term "air conditioning" most commonly refers to the cooling and dehumidification of indoor air for thermal comfort. In a broader sense, the term can refer to any form of cooling, heating, ventilation or disinfection that modifies the condition of air. Usually the aim of air conditioning is to provide an indoor environment that remains relatively constant in a range preferred by humans despite changes in external weather conditions or in internal heat loads.

In the art electrical air conditioning has been known since the early 20^{th} century. Since then many different types of air conditioning have been developed, ranging from a simple fan to elaborate clean room systems. Air conditioning systems that involve the control of the humidity or the cleanliness of air in a closed space are typically located outside that closed space, as they involve large ducts and noisy equipment. As such, these air conditioning systems are not very flexible.

Therefore the need exists for an improved air conditioning system that is more flexible.

According to the invention there is provided a mobile system for conditioning air of a limited air space comprising at least one means for air displacement, at least one means for air purification, at least one means for air moisture control, at least one means for air temperature control and at least one means for air redistribution, wherein the at least one means for air displacement and the at least one means for air redistribution are arranged to create displacement ventilation in the limited air space.

Throughout the specification the term "limited air space" is used to denote the air space surrounding the air conditioning system that is affected by the air conditioning system according to the invention. The limited air space may be, for example, a room in a building or vehicle, for example a truck, train or airplane. Alternatively, the limited air space may be a section of a larger space, for example in an airport or hotel lobby or even outside in the open.

Throughout the specification the term "mobile system" is used to denote that the air conditioning system according to the invention is not permanently installed within a superior structure, like a building. Instead, only detachable connections, if there are any connections at all, exist with that superior structure, for example a detachable connection to utilities like electricity or water. Typically, these utilities are already present in the superior structure. The mobile system according to the invention may be moved to a different location with little effort and without construction work. This makes the air conditioning system according to the invention very flexible and at the same time achieves high comfort inside the limited air space.

Throughout the specification the term "means for air displacement" is used to denote a means capable of displacing air. As such, the means for air displacement is capable of creating an air flow. An example of a means for air displacement is a fan. The means for air displacement also include for example valves, ducts, grills or walls that aid in directing the air flow of surrounding air in and through the air conditioning system according to the invention.

Throughout the specification the term "means for air purification" is used to denote a means capable of purifying the air in the air conditioning system according to the invention. Air cleanliness relates to the concentration of airborne contaminants, such as fumes, smoke, micro-organisms, dusts and other particles in the air. The means for air purification increases the cleanliness of air by removing contaminants from the air while the air is inside the air conditioning system according to the invention. Examples of means for air purification are filters made from textile, paper, foam, cotton, polyester or micro fibres, high efficiency particulate air filters, electrostatic filters, charcoal filters, ionizers, ozone generators and biological or microbiological filters and combinations thereof.

Throughout the specification the term "means for air moisture control" is used to denote a means capable of increasing the humidity of air or decreasing the humidity of air, as appropriate. Humidity is the amount of moisture within the air. The moisture level in the air may have adverse effects on humans and surrounding elements. Low humidity may lead to a dry nose, throat, eyes, and skin, typically when the dew point is below 0 degrees Celsius or relative humidity is below about 30 percent. On the other side, high humidity tends to increase skin moisture and also may result in discomfort. Relative humidity levels within the range from about 30 to about 60 percent have been found to be the most agreeable range for human comfort. An example of a means for air moisture control is a water condenser that cools the air below the condensation point and collects the condensed water. An example of a water condenser is a cooling coil or a heat exchanger. The moisture level in the air may be increased by a water spray.

Throughout the specification the term "means for air temperature control" is used to denote a means capable of changing and controlling the temperature of the air in the air conditioning system according to the invention. A common example of a means for air temperature control is also a heat exchanger. Such a heat exchanger brings the air in contact with an outer side of a surface with a controlled temperature. For example that surface may be cooled or heated by circulating a cooling or heating fluid on the inner side of the surface. Such a fluid may be for example water, oil or a refrigerant. The temperature of the cooling or heating fluid is typically controlled by a heater, a thermoelectric heat pump (Peltier element), a direct expansion coil or a chilled water coil. Typically the means for air temperature control include a thermostat. Parts of the means for air moisture control and for air temperature control may be located outside the limited air space. For example the heat exchanger that supplies the cooling or heating fluid may be located outside. For example, chilled water may be supplied by an existing chilled water circuit of a superior structure in which the limited air space is located. In a preferred embodiment of the air conditioning system according to the invention, the at least one means for air moisture control and the at least one means for air temperature control is the same heat exchanger.

Throughout the specification the term "means for air redistribution" is used to denote a means capable of supplying the air from the system back into the limited air space surrounding the system. This includes for example means to create a specific air flow in the limited air space with specific air velocities and air volume rates, such as for example valves, ducts, grills or walls. Preferably, the at least one means for air displacement and the means for air redistribution exchange the air of the limited air space between about 2 and about 20 times per hour, more preferably about 10 times per hour.

Preferably, the at least one means for air displacement of the system according to the invention creates a substantially constant air flow through the system at a substantially constant pressure drop. Preferably the pressure drop is in the range of about 100 Pascal to about 300 Pascal. More preferably the pressure drop is in the range of about 150 Pascal to about 200 Pascal.

Displacement ventilation systems introduce air at low velocities to cause minimal induction and minimal mixing. Displacement ventilation takes advantage of the difference in air density between a warm upper contaminated zone and a cool lower clean zone. Cool air is supplied at low velocity into the lower zone. Convection created by the heat sources produces a vertical air motion into the upper zone where the unconditioned air is removed and further processed. The air quality achievable by displacement ventilation systems in the limited air space is generally superior to that achieved with mixing room air distribution.

Preferably, the at least one means for air purification of the system according to the invention comprises at least one of a pre-filter, a regular filter, a high efficiency-particulate air filter and an active carbon filter. The combination of these filtration elements advantageously removes dusts, large and small airborne particles, odours and fumes to achieve a high level of air purification.

Preferably, the at least one means for air purification of the system according to the invention comprises a bio-filter. More preferably, the bio-filter comprises at least one water layer through which the air flow passes, wherein said at least one water layer comprises micro-organisms suitable to remove and reduce water soluble particles in the air flow. Such a bio-filter is known, for example, from International patent application WO96/22147. Such a bio-filter has the advantage that the contaminants that are removed by the bio-filter are additionally decomposed by the bio-filter. As such, the contaminants are substantially removed from the air conditioning system according to the invention.

Preferably, the at least one means for air purification comprises plant material such as green plants and hydro-cultures. A first advantage of the use of green plants and hydro-cultures is that they work on a natural basis. A second advantage is that the green plants and hydro-cultures may additionally humidify the limited air space. This may be assisted by spraying water vapour onto the green plants and hydro-cultures. A third advantage is the aesthetic value of green plants and hydro-cultures as they add a fresh look to the limited air space. This further improves the pleasant character of the limited air space to a human inside that limited air space.

Preferably, the at least one means for air moisture control of the system according to the invention is arranged to cool the air flow below the condensation point to lower the humidity of the air flow.

Preferably, air outlets are located at or near the floor level of the limited air space and air is supplied directly into the limited air space. This air is preferably spread over the entire floor and then rises as it is heated by the heat sources, such as people, in the limited air space.

Preferably, the air conditioning system according to the invention comprises at least one means for space limitation that limits the volume of limited air space affected by the air conditioning system according to the invention. This is particularly preferred when the system is used in a large space which is significantly bigger than the limited air space that is affected by the system. Preferably, the at least one means for space limitation comprises movable partitioning walls or air curtains or both. Additionally, or alternatively, the means for space limitation may comprise a roof. The roof aids in redirecting the air flow in the limited air space to an air inlet located at the top of the system. Preferably, a further air inlet is provided on the top of the roof in order to mix the air inflow from the limited air space with an air inflow from outside the limited air space. Preferably, the additional air inflow is of the order of about 5 to about 30 percent of the air inflow of the limited air space, more preferably about 10 percent of the air inflow of the limited air space.

Preferably, the system further comprises ventilated ashtrays.

The invention will be further described, by way of example only, with reference to the accompanying drawings in which:
Figure 1 shows a cross sectional view of a first embodiment of the air conditioning system according to the invention;
Figure 2 shows a cross sectional view of a second embodiment of the air conditioning system according to the invention;

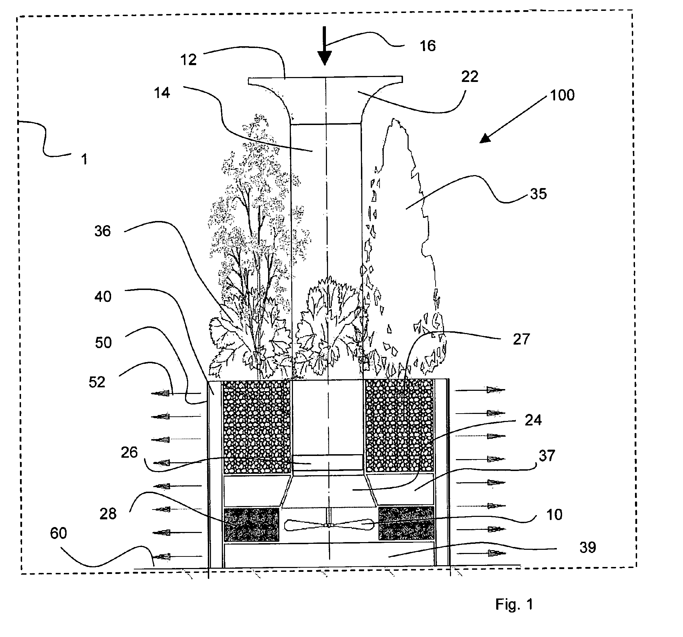

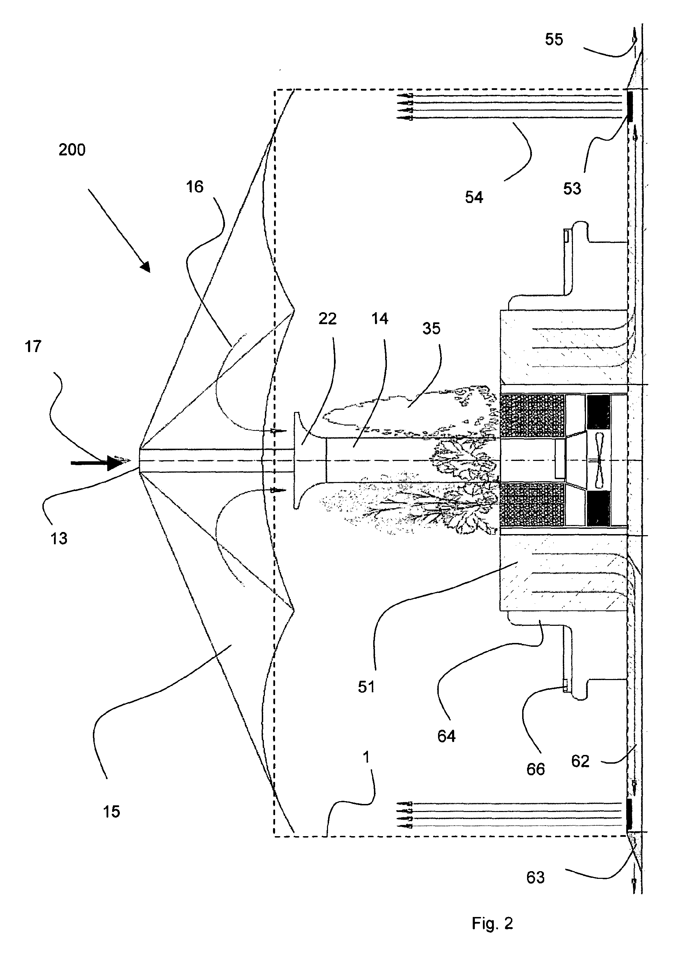

In the Figures 1 and 2 showing the first and second embodiments of the air conditioning system according to the invention similar features have been denoted with the same reference numerals.

In the air conditioning system 100 shown in Figure 1 a ventilator 10 is arranged to displace the air inside the air conditioning system 100. The ventilator creates an air flow 16. The air flow 16 enters the air conditioning system 100 at the air intake 12, through a first pre-filtration unit 22, through conduit 14 and through the central filtration system 24. The air flow 16 is then directed through a charcoal filter 26 and a bio-filter 28. The cleaned air then passes through a cooler 40. The conditioned supply air 52 is redistributed slowly at the lower part of the air conditioning system 100 into the limited air space 1 (shown with dashed lines in Figures 1 and 2) surrounding the air conditioning system 100 through a grill 50. The supply air 52 is set up to create displacement ventilation in the limited air space 1. Thus the conditioned air 52 spreads in the lower part of the limited air space 1 at a temperature that is lower than the temperature of the air in the limited air space 1. The conditioned supply air 52 is gradually heated in the limited air space 1, for example by people inside the limited air space 1. With only little or no mixing the gradually heated conditioned supply air 52 rises up and takes unconditioned air including particles up where the cycle is completed at the intake 12 of the air conditioning system 100.

The pre-filter 22 is a textile filter which removes particles with a size of more than about 4 micrometres, such as dust or pollen. The central filtration system is a high efficiency particle filter 24 which removes particles with a size between about 1 nanometre and about 10 micrometres from the air flow 16, such as fine dust, bacteria, aerosols or viruses. The charcoal filter 26 removes particles with a size of between about 0.2 nanometres and about 5 nanometres from the air flow 16, like gaseous components like fumes and odours. The bio-filter 28 removes water soluble contaminants from the air flow 16 as described for example in WO96/22147. At the same time, micro-organisms in the bio-filter 28 decompose the removed contaminants. The plants 35, 36 comprise green plants 35 and hydro-cultures 36 supported by porous granules 27. Water slowly passes through the porous granules 27 down into a first water reservoir 37. From the first water reservoir 37 the water slowly trickles through the bio-filter where it is cleaned and at the same time removes contaminants from the air flow 16. Cleaned water passing through the bio-filter 28 is collected in the second water reservoir 39. The second water reservoir 39 also collects the condensed water from the cooler 40 and circulates the water to the plants 35, 36.

After the air flow 16 has passed through the filters 22, 24, 28, 26, the cleanliness of the supply air 52 is significantly improved as compared to the cleanliness of the air at the intake 12 of the system 100.

The humidity and the temperature of the air flow 16 and is reduced by the cooling element 40. Typically, the temperature of the redistributed air is in the range of about 10 degrees to about 18 degrees.

The air conditioning system 200 shown in Figure 2 has a similar basic structure as the air conditioning system 100. The differences are the additional roof 15, a second inlet 13 for a separate air flow 17 and the floor 62 which is used as a conduit for the air flow 16 of the air distribution means 51, 53, 63. In the air conditioning system 200 the air distribution is such that an air curtain 54 is created by the outlets 53 located at the outer periphery of the floor 62. The air curtain 54 forms an invisible barrier for surrounding air to enter the limited air space 1 under the roof 15. Additionally, outlets 63 on the sides of the floor 62 allow an additional air flow 55 to maintain a constant pressure inside the limited air space 1.

Additionally, the air conditioning system 200 comprises a plenum 51. Next to plenum 51 chairs or benches 64 are arranged. Ventilated ashtrays 66 are located inside the chairs or benches 64.

The air conditioning systems 100, 200 may further comprise wheels that facilitate the movement of the air conditioning system 100, 200. Additionally, the system may comprise a power source like a generator or batteries (not shown) or may comprise a simple plug to connect the system with a wall socket or other external sources of electricity. Additionally, the air conditioning systems 100, 200 may comprise a control unit (not shown) that controls the operation for example of the ventilator 10 and the cooling element 40, measures the air flow 16, the air temperature and pressure inside and outside the system, the filling level in the water reservoirs 37, 39 or detects the presence of people in the limited air space 1 and may provide access to the world wide web. The control unit may be controlled remotely or directly. The air conditioning system may further provide lights and entertainment to people in the limited air space 1, for example, music, radio, billboards, display cases, direct or wireless internet access, television, video, console games and dispensers for consumer goods such as beverages or food.

The air conditioning system 100 may be used in a closed limited air space like a room, a tent or a vehicle like a car, a truck, a train or an airplane.

The air conditioning system 200 may also be used in large open spaces, indoors or outside.

## Claims

1. A system (100, 200) for conditioning air of a limited air space (1) comprising
at least one means for air displacement (10, 12, 13, 14, 15, 62)
at least one means for air purification (22, 24, 26, 28),
at least one means for air moisture control (28, 35, 36, 40),
at least one means for air temperature control (40), and
at least one means for air redistribution (50, 53, 63),
wherein the at least one means for air displacement (10, 12, 13, 14, 15, 62) and at the at least one means for air redistribution (50, 53, 63) are arranged to create displacement ventilation in the limited air space (1) and
wherein the system (100, 200) is mobile.

2. A system for conditioning air according to claim 1,
wherein the at least one means for air displacement (10, 12, 13, 14, 15, 62) creates a substantially constant air flow (16) through the system (100, 200) at a substantially constant pressure drop.

3. A system for conditioning air according to any of claims 1 to 2,
wherein the at least one means for air purification (22, 24, 26, 28) comprises at least one filter selected from the group consisting of a pre-filter (22), a high efficiency-particulate air filter (24) and an active carbon filter (26).

4. A system for conditioning air according to any of claims 1 to 3,
wherein the at least one means for air purification (28, 35, 36, 40) comprises a bio-filter (28).

5. A system for conditioning air according to claim 4,
wherein the bio-filter (28) comprises at least one water layer through which the air flow (16) passes.

6. A system for conditioning air according to any of claims 1 to 5,
wherein the at least one means for air purification (28, 35, 36, 40) comprises plant material (35, 36) such as green plants (35) and hydro-cultures (36).

7. A system for conditioning air according to claim 6,
wherein the at least one means for air moisture control (28, 35, 36, 40) is arranged to cool the air flow (16) below the condensation point to lower the humidity of the air flow (16).

8. A system for conditioning air according to any of claims 1 to 7,
wherein the at least one means for air displacement (10, 12, 13, 14, 15, 62) further comprises an air system entry (12, 13) located at the top of the system (100, 200) and an air system exit (50, 53, 63) at the bottom of the system (100, 200).

9. A system for conditioning air according to any of claims 1 to 8,
wherein the system (100, 200) comprises at least one means for space limitation (15, 54) that limits the volume of limited air space (1) affected by the system (100, 200).

10. A system for conditioning air according to claim 9,
wherein the at least one means for space limitation comprises at least one of the group consisting of partitioning walls and an air curtain (54) and a roof (15).
